# FASCICULE DE BREVET EUROPEEN

(11) **EP 1 154 120 B1**
(45) Date de publication et mention de la délivrance du brevet: **19.07.2006**
(21) Numéro de dépôt: 01401212.4
(22) Date de dépôt: 11.05.2001
(51) Int. Cl.: E06B 9/68, E06B 9/32, G05B 19/042, G05B 19/42, E06B 9/88, E05F 15/10

(54) **Dispositif de commande de systèmes d'occultation motorisés à memorisation de fin de course perfectionée**
Steuerung für motorgetriebene Verdunkelungssysteme mit perfektionierter Endabschaltung
Control for motor driven shading devices with perfected end of course memory

(30) Priorité: 12.05.2000 FR 0006106
(43) Date de publication de la demande: 14.11.2001
(73) Titulaire: M Four Group, 75008 Paris (FR)
(72) Inventeur: Ischoffen, Pascal, 78510 Triel sur Seine (FR)
(74) Mandataire: Texier, Christian

(56) Documents cités:
- EP-A- 0 426 577
- EP-A- 0 822 315

## Description

La présente invention concerne le domaine des systèmes d'occultation motorisés, tels que les stores, bannes, volets, portes ou équivalents, destinés notamment à masquer la lumière et/ou à constituer un barrage contre les intrusions.

Par la suite l'élément déplaçable de ces systèmes d'occultation sera dénommé, quelque soit sa constitution ou fonction, par le terme générique « tablier », sans que cette expression puisse être considérée comme limitative.

Plus précisément, la présente invention concerne les moyens de commande de tels systèmes d'occultation.

Par le passé, les systèmes d'occultation du genre précité, étaient entraînés manuellement, entre leur position d'ouverture ou de repliement et leur position de fermeture ou de déploiement, ou encore une position choisie intermédiaire entre celles-ci, par exemple à l'aide d'engrenages actionnés manuellement.

Cependant, pour améliorer le confort des utilisateurs, on a proposé déjà depuis de nombreuses années, de motoriser ces systèmes d'occultation.

Ainsi la plupart des systèmes d'occultation installés de nos jours sont entraînés par un moteur électrique ou motoréducteur. Plus précisément la plupart des systèmes installés aujourd'hui comprennent un tube d'enroulement sur lequel le tablier du système d'occultation est enroulé, dans sa position "d'ouverture" ou de « repliement », et un motoréducteur à commande électrique associé au tube d'enroulement.

Ces systèmes d'occultation et leurs moyens de commande ont donné lieu à une littérature abondante.

On connaît, par exemple, le brevet européen EP 0 426 577 qui décrit un procédé et un dispositif pour déplacer un élément d'occultation jusqu'à des positions stables réglables dans lequel la phase de programmation des positions extrêmes haute et basse de l'élément d'occultation est obtenue en appuyant simultanément sur deux touches d'un boîtier commande comprenant trois touches pendant une durée déterminée. Pour mémoriser la position extrême basse, l'élément d'occultation est déplacé jusqu'à la position souhaitée, puis l'utilisateur appuie successivement sur deux touches du boîtier de commande pour mémoriser la position de l'élément d'occultation. Pour mémoriser la position extrême haute, l'utilisateur exécute des opérations identiques. L'utilisateur déplace l'élément d'occultation jusqu'à la position souhaitée, puis il appuie à nouveau successivement sur deux touches du boîtier de commande pour mémoriser la position de l'élément d'occultation. Ainsi, la programmation des positions extrêmes de l'élément d'occultation est obtenue en mémorisant successivement les positions extrêmes basse puis haute en appuyant pour chacune des positions sur une succession de boutons de commande.

Par ailleurs, le brevet européen EP 0 822 315 décrit un circuit de contrôle de moteurs électriques pour stores enroulables et notamment une programmation des positions extrêmes de l'élément d'occultation. La programmation de la position extrême haute s'effectue en appuyant simultanément sur deux interrupteurs de commande puis en déplaçant l'élément d'occultation jusqu'à la position souhaitée au moyen de l'un des deux interrupteurs et finalement en appuyant à nouveau simultanément sur les deux interrupteurs pour mémoriser la position de l'élément d'occultation. La programmation de la position extrême basse est en tous points identique à la programmation de la position extrême haute.

Cependant les moyens jusqu'ici proposés ne donnent pas toujours satisfaction. En effet, il est nécessaire pour l'utilisateur d'effectuer un grand nombre d'opérations pour mémoriser les positions extrêmes de l'élément d'occultation multipliant ainsi les risques d'erreur de manipulation.

La présente invention a maintenant pour but de proposer de nouveaux moyens permettant d'améliorer le confort des utilisateurs et/ou installateurs.

Un autre but important de la présente invention est de proposer des moyens de commande universels, que ce soit dans une version de type commande filaire ou de type commande radio, aptes à commander tout type de système d'occultation, notamment volet ou banne.

Un autre but important de la présente invention est de proposer des moyens de commande adaptés pour une programmation facile par tout installateur, propre à permettre une adaptation aisée sur tout site d'utilisation.

Selon un premier aspect important de la présente invention, les buts précités sont atteints grâce à un dispositif de commande comprenant des moyens de mémorisation des deux fins de course du système d'occultation, correspondant respectivement à une position de fermeture et à une position d'ouverture, caractérisé par le fait que les moyens de mémorisation sont adaptés, dans une phase de programmation, à mémoriser préalablement une première fin de course, puis à mémoriser automatiquement en tant que deuxième fin de course, lorsque le système d'occultation atteint ladite première fin de course mémorisée, la position à partir de laquelle le système d'occultation est déplacé avant d'atteindre ladite première fin de course préalablement mémorisée.

Selon un deuxième aspect important de la présente invention, les buts précités sont atteints grâce à un dispositif de commande comprenant un circuit de commande d'une motorisation, le circuit comportant au moins une entrée susceptible d'être placée sélectivement dans un état de mode programmation par établissement d'un shunt entre cette entrée et un autre conducteur, telle qu'une ligne d'alimentation électrique, et des moyens sensibles à la durée de cet état pour imposer, selon cette durée, un choix dans un menu parmi différents types prédéfinis de programmation.

Dans le cadre de la présente invention, le terme « programmation » doit ici être compris dans un sens large, comme englobant notamment toute définition de configuration, mode ou fonction.

De même dans le cadre de la présente invention, le terme « shunt » doit être compris dans un sens général. Il englobe tout type de liaison, notamment une liaison directe sous forme d'un court-circuit, une liaison résistive, une liaison capacitive, une liaison unidirectionnelle à diode, etc ...

Selon une première mise en oeuvre, dans le cadre d'une application par commande filaire du circuit précité, le dispositif de commande comprend au moins deux moyens d'actionnement qui, lorsqu'ils sont respectivement validés, sollicitent le système d'occultation, l'un vers sa position de fermeture ou déploiement, et l'autre vers sa position d'ouverture ou repliement, caractérisé par le fait qu'il comprend des moyens aptes à imposer un mode de programmation du dispositif de commande lorsqu'une validation simultanée des deux moyens d'actionnement est détectée.

Selon une deuxième mise en oeuvre, dans le cadre d'une application par commande radio du circuit précité, le dispositif de commande comprend un câble relié au circuit précité comprenant au moins deux fils reliés l'un à une ligne d'alimentation électrique, l'autre à une entrée d'un contrôleur, de sorte que la liaison des deux fils précités impose le passage du circuit de commande dans un mode programmation.

Selon un troisième aspect important de la présente invention, les buts précités sont atteints grâce à un dispositif de commande comprenant des moyens sensibles à la durée d'activation de moyens de sollicitation, pour assurer des fonctions actives différentes selon que la durée d'activation est inférieure ou supérieure à au moins un seuil déterminé.

Selon une autre caractéristique avantageuse de la présente invention, les fonctions actives différentes précitées correspondent soit à une fonction de déplacement du système d'occultation, soit à une fonction de mémorisation de fins de course.

D'autres caractéristiques, buts et avantages de la présente invention apparaîtront à la lecture de la description détaillée qui va suivre et en regard des dessins annexés, donnés à titre d'exemples non limitatifs et sur lesquels :
- la figure 1 représente une vue schématique, sous forme de blocs fonctionnels d'un dispositif de commande de système d'occultation, conforme à l'état de la technique, du type commande filaire,
- la figure 2 représente une vue schématique, sous forme de blocs fonctionnels d'un dispositif de commande de système d'occultation, conforme à l'état de la technique, du type commande radio,
- la figure 3 représente une vue schématique, sous forme de blocs fonctionnels d'un dispositif de commande de système d'occultation, conforme à la présente invention, du type commande filaire,
- la figure 4 représente une vue schématique, sous forme de blocs fonctionnels d'un dispositif de commande de système d'occultation, conforme à la présente invention, du type commande radio, et
- les figures 5 à 8 représentent quatre tables de vérité illustrant le procédé de programmation mis en oeuvre dans le cadre de la présente invention.

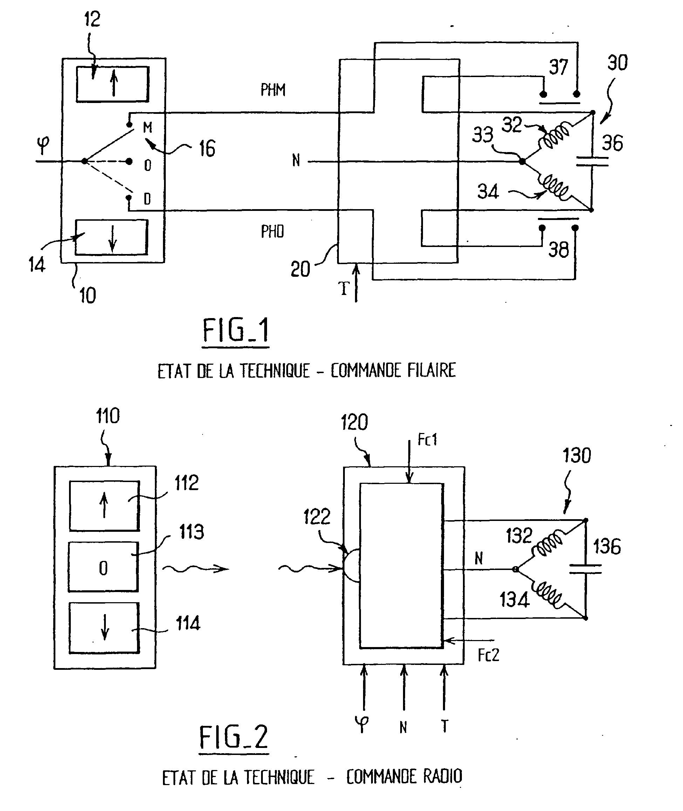

Le système connu de type filaire illustré sur la figure 1 annexée comprend un boîtier de commande 10, une carte de commande 20 et un moteur 30.

Le moteur 30 schématisé sur la figure 1 comprend deux bobinages 32, 34 dont un point commun 33 est relié au neutre N tandis que les secondes extrémités des bobinages 32, 34 sont reliées entre elles par l'intermédiaire d'un condensateur 36. Par ailleurs, ces secondes extrémités, en fonctionnement normal, sont susceptibles d'être reliées alternativement à une ligne de phase. Ainsi, selon le bobinage 32 ou 34 alimenté, le moteur 30 entraîne le système d'occultation vers sa position d'ouverture ou sa position de fermeture.

Le boîtier de commande 10 illustré sur la figure 1 comprend deux boutons de commande 12, 14 aptes à piloter un inverseur 16 à trois positions électriques : une première position O dans laquelle aucun des deux boutons 12, 14 n'est actionné, deux lignes de sortie PHM et PHD du boîtier 10 sont en l'air et le moteur 30 est à l'arrêt, aucun des deux bobinages 32, 34 n'étant alimenté; une deuxième position M dans laquelle le bouton de montée 12 est actionné, l'inverseur 16 est placé sur une position M et la ligne de sortie PHM est reliée à la phase pour assurer l'alimentation du bobinage 32 et le déplacement du système d'occultation vers sa position d'ouverture ; et une troisième position D dans laquelle le bouton de descente 14 est actionné, l'inverseur 16 est placé sur une position D et la ligne de sortie PHD est reliée à la phase pour assurer l'alimentation du bobinage 34 et le déplacement du système d'occultation vers sa position de fermeture.

La carte de commande 20 reçoit par l'intermédiaire d'un câble à quatre fils les lignes de sortie PHM et PHD du boîtier 10 ainsi que la ligne de neutre N et une ligne de terre T. Elle a pour fonction de relier respectivement les lignes de sortie PHM et PHD aux bobinages 32 et 34. La carte de commande 20 conditionne cette liaison selon l'état de contacts de fin de course 37, 38, par exemple montés typiquement en série des lignes PHM et PHD, pour interrompre l'alimentation des bobinages 32, 34, lorsque le système d'occultation atteint l'une de ses extrémités de course autorisées.

On a représenté sur la figure 2 annexée, un système connu à commande radio comprenant un boîtier 110 fixe ou portable, une carte de commande 120 et un moteur 130.

Le moteur 130 comprend typiquement deux bobinages 132,134 reliés au neutre sur un point commun et par ailleurs entre eux par l'intermédiaire d'un condensateur 136 comme indiqué précédemment pour la figure 1.

Le boîtier 110 comprend typiquement trois touches 112, 114, 113, utilisées respectivement pour provoquer l'émission d'une onde électromagnétique codée sollicitant la montée, la descente ou l'arrêt du système d'occultation associé.

La carte 120 comporte un récepteur 122 conçu pour détecter ces ondes, et selon la nature de l'ordre ainsi reçu, assurer l'alimentation de l'un des bobinages 132, 134, à partir d'une ligne de phase, ou l'arrêt de cette alimentation. A cette fin, outre la ligne de phase précitée, la carte 120 reçoit une ligne de neutre N, une ligne de terre T et des signaux FC1 et FC2 représentatifs de fin de course.

Comme on l'a indiqué précédemment, la présente invention peut s'appliquer soit à un système à commande filaire, soit à un système à commande radio.

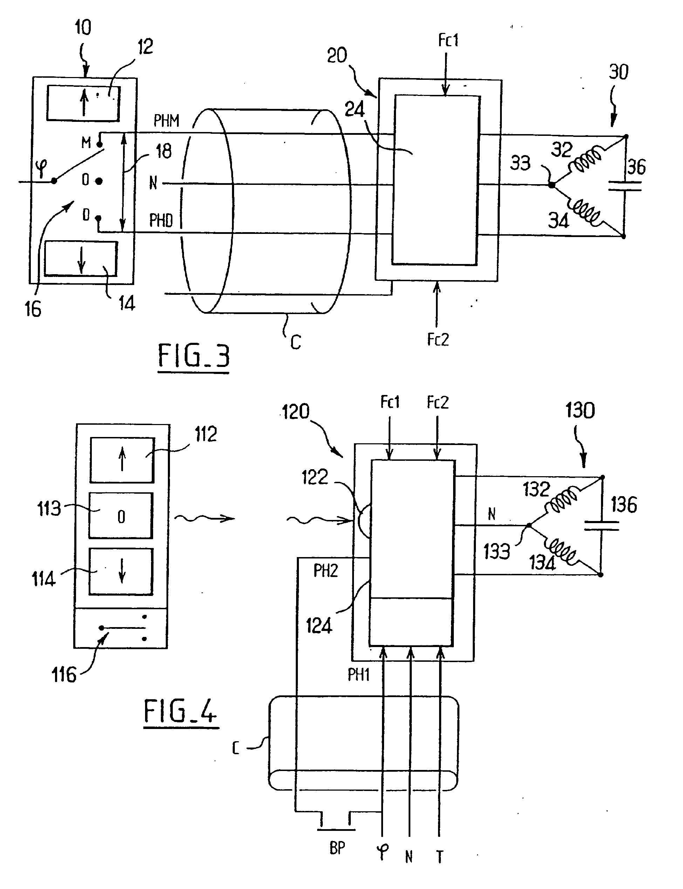

On va tout d'abord décrire, le système à commande filaire conforme à la présente invention illustré sur la figure 3 annexée.

On retrouve sur cette figure, un boîtier de commande 10 conforme à la figure 1, et un moteur 30 conforme à la figure 1. Le système illustré sur la figure 3 comprend en outre une carte de commande 20 comprenant un contrôleur 24. Celui-ci reçoit sur un câble à quatre fils les lignes PHM et PHD issues du boîtier 10 ainsi qu'une ligne de neutre N et une ligne de terre T. En outre, le contrôleur 24 reçoit des signaux FC1 ou FC2 représentatifs de fin de course.

Dans le cadre de l'invention, les signaux représentatifs de fin de course peuvent faire l'objet de nombreuses modalités. Ils peuvent être obtenus à partir de contacteurs mécaniques de fin de course actionnés par le tablier du système d'occultation, ou encore issus d'une cellule surveillant l'intensité ou la phase du courant et/ou de la tension dans les bobinages 32, 34. Cependant, de préférence dans le cadre de l'invention, ces signaux FC1 et FC2 sont générés à partir d'un codeur angulaire associé à l'arbre de sortie du moteur 30, par exemple à partir d'un codeur optique comprenant une roue codée optiquement (par exemple comprenant une alternance de segments transparents et opaques ou encore une alternance de segments réfléchissants et non réfléchissants) associée à une fourchette de détection optique, ou encore une roue codée magnétiquement associé à un capteur associé, par exemple une sonde à effet Hall. Par comptage des impulsions issues de la fourchette ou du capteur, le contrôleur 24 peut connaître directement la position du tablier du système d'occultation, par rapport à une position arbitraire connue d'origine.

Les deux boutons 12, 14 du boîtier 10 constituent deux moyens d'actionnement, qui lorsqu'ils sont respectivement validés, sollicitent le système d'occultation, l'un vers sa position de fermeture, et l'autre vers sa position d'ouverture. Comme on l'a indiqué précédemment, selon l'invention, le contrôleur 24 comprend des moyens aptes à imposer un mode de programmation du dispositif de commande, lorsqu'ils détectent une validation simultanée des deux lignes PHM et PHD.

En pratique, une telle validation simultanée des deux lignes PHM et PHD peut être obtenue , par un installateur, en reliant les deux lignes PHM et PHD entre elles, par exemple à l'aide d'un bornier ou un cavalier 18 prévu spécifiquement à cet effet à l'intérieur du boîtier 10 et en sollicitant l'une des touches 12 ou 14 pour relier ainsi les deux lignes de sortie PHM et PHD simultanément à la phase.

Il faut noter cependant ici que le dispositif conforme à la présente invention fonctionne parfaitement si les connexions de la phase et du neutre provenant du réseau de distribution électrique sont inversées, c'est à dire si la ligne d'alimentation correspondant à la phase est reliée sur le point commun 33 des bobinages, tandis que la ligne de neutre est alors appliquée sur l'entrée du boîtier 10 et par conséquent sur les lignes PHM et PHD.

Pour simplifier le descriptif, par la suite lorsque l'on évoquera la validation des lignes PHM et PHD, l'on fera état de leur liaison préférentielle à la « phase ».

Il est cependant bien entendu qu'il peut s'agir d'une façon plus générale d'une « ligne d'alimentation électrique », phase ou neutre, si les connexions adéquates sont par ailleurs respectées, ou encore indépendamment d'une telle ligne d'alimentation électrique, tout type de liaison entre les lignes concernées PHM et PHD, notamment une liaison directe sous forme d'un court-circuit, une liaison résistive, une liaison capacitive, une liaison unidirectionnelle à diode, etc ...

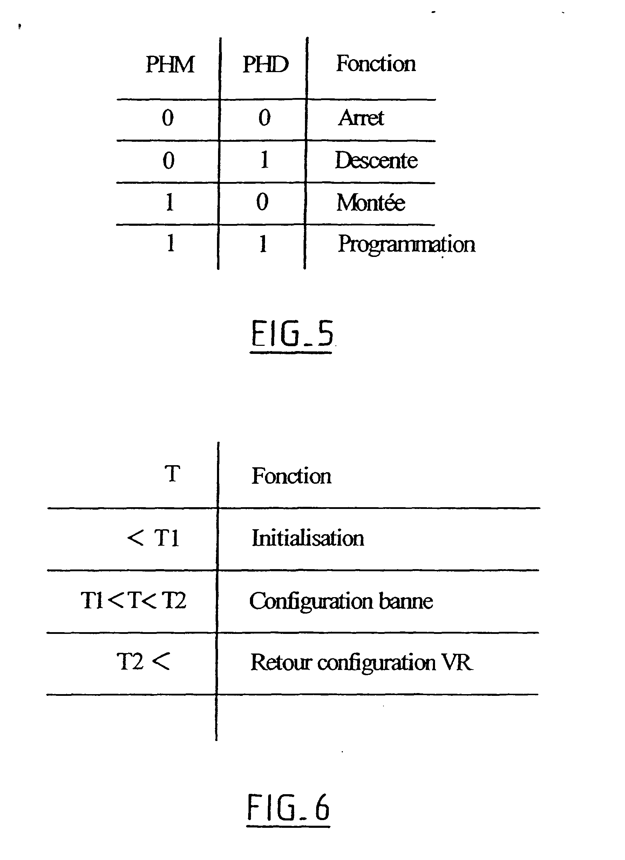

On obtient alors la table de vérité illustrée sur la figure 5 :
- lorsque les deux lignes PHM et PHD sont en l'air à l'état 0, aucun bobinage 32, 34 n'est alimenté. Le moteur est à l'arrêt,
- lorsque seule la ligne PHD est activée à l'état 1, le bobinage 34 est alimenté et le système d'occultation est déplacé vers sa position de déploiement,
- lorsque seule la ligne PHM est activée à l'état 1, le bobinage 32 est alimenté et le système d'occultation est déplacé vers sa position de repliement, et
- lorsque les deux lignes PHM et PHD sont activées à l'état 1, le contrôleur 24 passe en mode programmation, mais interdit l'application simultanée de la tension de phase sur les deux bobinages 32, 34 pour éviter la détérioration du moteur 30.

Ainsi le dispositif conforme à la présente invention exploite un état (liaison simultanée des deux lignes PHM et PHD) qui est interdit selon l'état de la technique car il est selon celui-ci susceptible de déteriorer le moteur 30.

Plus précisément encore, comme on l'a indiqué précédemment, dans le cadre de l'invention, le contrôleur 24 est sensible à la durée de validation simultanée des deux moyens d'actionnement PHM et PHD.

Comme on l'a illustré sur la figure 6, typiquement le contrôleur 24 compare la durée d'activation simultanée des deux moyens d'actionnement PHM et PHD à deux seuils de temps T1 et T2.

Typiquement mais non limitativement, T1 et T2 peuvent être de l'ordre de 5 et 50s.

Ainsi, comme illustré sur la figure 6 :
- lorsque la durée de liaison simultanée à la phase de PHM et PHD est inférieure à T1 (5s), de préférence le contrôleur 24 impose une réinitialisation du circuit de commande (le circuit revient alors dans une configuration usine. On efface alors notamment les éventuelles fins de course spécifiques préalablement mémorisées) ;
- lorsque la durée de liaison simultanée à la phase de PHM et PHD est supérieure à T1 et inférieure à T2 (soit compris par exemple entre 5 et 50s, typiquement de l'ordre de 30s) de préférence le contrôleur 24 impose une première configuration, par exemple une configuration banne ;
- lorsque la durée de liaison simultanée à la phase de PHM et PHD est supérieure à T2 (soit de préférence supérieure à 50s), de préférence le contrôleur 24 impose une seconde configuration, par exemple une configuration volet roulant (il s'agit d'ailleurs de préférence d'un retour à la configuration usine volet roulant).

Dans le cadre de l'invention, la configuration banne se distingue de la configuration volet roulant par le fait qu'en configuration banne on force de préférence la motorisation jusqu'à la position de repliement extrême pour garantir un stockage de la toile de banne dans un coffre étanche, alors qu'au contraire, en position volet roulant, on veille à arrêter la motorisation en deçà des positions extrêmes attendues.

En pratique, la durée d'activation des lignes PHM et PHD est contrôlée, pour sélectionner parmi les trois possibilités précitées, réinitialisation, mode banne ou mode volet roulant, en contrôlant la durée d'actionnement de l'une des touches 12 ou 14 après avoir relié les deux fils PHM et PHD entre eux, par exemple à l'aide du cavalier 18.

On rappelle qu'un dispositif de verrouillage mécanique interdit l'activation simultanée des deux touches 12 et 14.

Pour régler les fins de course du système, on procède de préférence comme suit.

Distinguons trois cas : 1) le cas de deux butées réglées automatiquement, 2) le cas d'une butée réglée automatiquement et d'une butée réglée manuellement et 3) le cas de deux butées réglées manuellement.

Dans le cas de deux butées réglées automatiquement, par exemple d'un volet roulant équipé d'une butée physique haute et d'une butée physique basse, on actionne une première touche, par exemple la touche de montée 12. Le tablier s'arrête sur la butée haute et la fin de course se règle automatiquement. La fin de course haute est mémorisée de façon définitive après x arrêts, par exemple quatre arrêts, dans sa plage d'arrêt autorisée. Pour mémoriser la butée opposée, on actionne l'autre touche, soit par exemple la touche de descente 14. Le tablier s'arrête sur la butée basse et la fin de course se règle automatiquement. La fin de course basse est mémorisée de façon définitive après y arrêts, par exemple quatre arrêts, dans sa plage d'arrêt autorisé.

Dans le cas d'une butée réglée automatiquement et d'une butée réglée manuellement, la touche correspondant à la butée à réglage automatique est activée. Par exemple dans le cas d'un volet roulant équipé d'une butée physique haute, uniquement la touche de montée 12 est activée. Le tablier s'arrête sur cette butée et la fin de course se règle automatiquement. Celle-ci est mémorisée de façon définitive après x arrêts, par exemple quatre arrêts, dans sa plage d'arrêt autorisée. Par contre, pour assurer le réglage de l'autre fin de course, soit la fin de course basse selon l'exemple précité, il n'est pas nécessaire d'effectuer y arrêts sur celle-ci. En effet, le contrôleur 24 est adapté pour mémoriser en tant que deuxième fin de course la position à partir de laquelle le système d'occultation est déplacé avant d'atteindre la première fin de course préalablement mémorisé. Ainsi, par exemple si la fin de course en butée haute a été réglée et mémorisée préalablement automatiquement, il suffit après avoir atteint la fin de course basse choisie, d'actionner la touche montée et laisser le tablier effectuer toute sa course jusqu'à la position butée haute préalablement mémorisée pour mémoriser en tant que fin de course basse la position de départ de ce déplacement.

Dans le cas de deux butées réglées manuellement, une première butée est mémorisée en ajustant la fin de course correspondante en utilisant les touches montée et descente puis en validant la mémorisation de cette position sans déplacement du tablier par une commande spécifique des touches, par exemple une séquence de trois appuis successifs rapides sur la touche de sollicitation vers cette butée (soit trois sollicitations de la touche 12 montée pour le réglage de la fin de course haute ou inversement trois sollicitations rapides de la touche 14 de descente pour la mémorisation d'une fin de course basse). Puis, la deuxième butée est mémorisée tout d'abord en ajustant cette fin de course par utilisation des touches montée et descente et une fois la fin de course recherchée obtenue, en actionnant la touche adéquate, de sorte que le tablier atteigne la fin de course préalablement mémorisée. Là encore, comme précédemment, la position à partir de laquelle le système d'occultation est déplacé, avant d'atteindre la première fin de course préalablement mémorisée, est mémorisée en tant que deuxième fin de course.

On notera que pour permettre le fonctionnement précité, le contrôleur 24 est adapté pour détecter la durée d'activation des touches 12 et 14 et comparer cette durée à un ou des seuils déterminés afin d'affecter auxdites touches des fonctions différentes selon leur durée d'activation.

Plus précisément encore, lorsque le contrôleur 24 détecte l'actionnement des touches montée/descente pendant une durée inférieure à un seuil, par exemple 0,5s, il attribue à l'actionnement des touches une commande de programmation, sans déplacement du tablier. Par contre, lorsque le contrôleur 24 décèle l'activation d'une touche pendant un temps supérieur à ce seuil, par exemple supérieur à une seconde, il attribue à cette touche une fonction de commande en déplacement du tablier.

Par ailleurs dans le cadre de l'invention, le contrôleur 24 est adapté de préférence pour assurer un réajustement automatique des fins de course toutes les Z actions, par exemple toutes les 256 actions, sauf dans le cas où les deux fins de course (haute et basse) sont réglées manuellement.

Le réajustement de la fin de course réglée automatiquement s'effectue uniquement dans sa plage d'arrêt autorisée.

Le réajustement de la fin de course réglée manuellement s'effectue en fonction de la position de la fin de course réglée automatiquement et de la longueur de la course du tablier (dans le cadre de la présente invention, on considère en effet que la hauteur du tablier est constante).

On va maintenant décrire, le système à commande radio conforme à la présente invention illustré sur la figuré 4 annexée.

On retrouve sur cette figure un boitier de commande (fixe, par exemple mural, ou portable) 110 apte à émettre des codes de commande montée/arrêt/descente, par ondes radio, lors d'actionnement de trois touches respectives 112, 113 et 114, un moteur 130 et une carte de commande 120 comportant un moyen 122 de réception des ordres reçus en provenance du boitier 110, et qui reçoit par ailleurs des signaux de phase ϕ, neutre N, terre T et de fins de course FC1 et FC2.

Les échanges entre l'émetteur 110 et le récepteur 122 peuvent faire l'objet de nombreux modes de réalisation. L'émetteur 110 et le récepteur 122 peuvent être monocanaux, la discrimination entre les différents états résultant de codes spécifiques. L'émetteur 110 et le récepteur 122 peuvent être multicanaux, chaque canal correspondant à un ordre spécifique. Ils peuvent également faire intervenir une combinaison des technologies multi-codes et multi-canaux.

Le cas échéant le choix dans un menu de programmation, entre un mode initialisation, configuration première par exemple banne et configuration seconde par exemple volet roulant, pourrait être obtenu par détection de la durée d'activation simultanée des deux touches 112 et 114, de manière analogique aux dispositions précédemment décrites en regard de la figure 3.

Cependant dans le cadre de la présente invention, on préfère, pour éviter une reprogrammation non intentionnelle, assurer la sélection de programmation à l'aide de moyens spécifiques constitués d'un cable C comportant au moins deux fils : l'un PH1 destiné à être relié à la phase côté alimentation secteur et à la carte d'alimentation du circuit de commande 120, et l'autre PH2 destiné à être relié à une entrée spécifique du contrôleur 124.

Là encore il faut noter que le dispositif fonctionne parfaitement si les connexions entre neutre et phase sont inversées.

En pratique, le câble précité C qui contient les fils PH1 et PH2 loge également les fils de neutre N et de terre T, comme on l'a schématisé sur la figure 4.

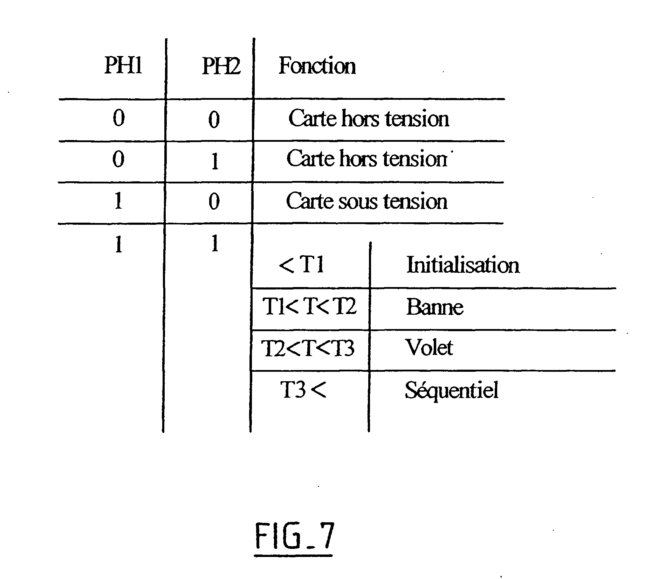

Comme on l'a illustré sur la figure 7 :
- lorsque le fil PH 1 n'est pas alimenté par la phase, état 0, quel que soit l'état du fil PH2, le circuit 120 n'est pas alimenté,
- lorsque le fil PH1 est seul alimenté, soit PH1 à 1 et PH2 à 0, le circuit 120 est alimenté, en attente d'ordre en provenance du boitier 110, en fonctionnement normal, et
- lorsque les deux fils PH1 et PH2 sont reliés simultanément à la phase, état 1, le circuit 120 est placé dans un mode de programmation.

De manière comparable au mode de réalisation précédemment décrit en regard des figures 3, 5 et 6, il suffit donc à un installateur de relier les fils PH1 et PH2, à la phase, à l'extrémité accessible du câble C, pour imposer un mode de programmation.

Et l'utilisation d'un câble C regroupant les deux fils PH1 et PH2 permet de déporter le site d'intervention pour piloter le mode de programmation en tout lieu approprié, par exemple un tableau d'alimentation, par rapport au coffre du système d'occultation qui loge le circuit 120 et son récepteur 122.

Il faut noter également ici que, de manière comparable au mode de réalisation à commande filaire précédemment décrit, le dispositif conforme à la présente invention illustré sur la figure 4, fonctionne parfaitement si les connexions de la phase et du neutre provenant du réseau de distribution électrique sont inversées, c'est à dire si la ligne d'alimentation correspondant à la phase est reliée sur le point commun 133 des bobinages, tandis que la ligne de neutre est alors appliquée sur la ligne PH1 et sur les extrémités des bobinages 132, 134 adjacentes au condensateur 136.

Par ailleurs le mode programmation peut être obtenu en reliant les lignes PH1 et PH2 entre elles, indépendamment d'une ligne d'alimentation électrique, par l'intermédiaire de tout type de liaison entre les lignes concernées, notamment une liaison directe sous forme d'un court-circuit, une liaison résistive, une liaison capacitive, une liaison unidirectionnelle à diode, etc ...

Par conséquent la mention de liaison à la « phase » utilisée par la suite pour simplifier le descriptif, devra être considérée comme une liaison préférentielle, mais non limitative.

Par ailleurs là encore de préférence, le contrôleur 124 est sensible au temps de liaison des deux fils PH1 et PH2.

Typiquement, mais non limitativement :
. pour une durée de liaison de PH1 et PH2 inférieure à un seuil T1, par exemple une durée de liaison de l'ordre de 5s, le contrôleur 124 passe dans un mode de réinitialisation, rétablissant le cablage d'origine,
. pour une durée de liaison de PH1 et PH2 comprise entre deux seuils T1 et T2, par exemple une durée de liaison de l'ordre de 30s, le contrôleur 124 passe dans une première configuration, par exemple une configuration banne, et
. pour une durée de liaison de PH1 et PH2 supérieure à un deuxième seuil T2, par exemple une durée de liaison de l'ordre de 60s, le contrôleur passe dans une deuxième configuration, par exemple une configuration volet roulant.

On notera que comme illustré sur la figure 7, dans le cadre de la présente invention, le contrôleur 124 peut être adapté pour détecter une durée de liaison entre PH1 et PH2 supérieure à un troisième seuil, par exemple une durée de liaison de l'ordre de 90s, pour piloter alors un mode de fonctionnement « séquentiel ». Une fois ce mode de fonctionnement séquentiel atteint, la ligne PH2 peut être déconnectée de la ligne PH1. Et toute liaison impulsionnelle ultérieure entre PH1 et PH2, entraîne les commandes alternées suivantes : montée / stop / descente / stop / montée /stop / etc...

Un tel mode de fonctionnement séquentiel peut être utilisé par exemple en cas de déficience du boitier de commande 110.

En pratique la liaison impulsionnelle précitée entre les fils PH1 et PH2 peut être obtenue à l'aide d'un bouton poussoir BP disposé sur l'extrémité du cable C, ou encore par tous moyens de liaison temporaire équivalent, par exemple un simple tronçon de cable équipé de deux pinces crocodiles.

De préférence l'accès à l'extrémité du fil PH2 et au bouton poussoir BP, lorsque celui-ci existe, est protégé, par exemple par une clé, pour éviter une manipulation intempestive de ceux-ci et garantir ainsi leur manipulation par un installateur compétent.

Par ailleurs pendant le fonctionnement séquentiel, de préférence le contrôleur 124 détecte la durée de liaison du fil PH2 à la phase, et compare cette durée de liaison à un seuil : en dessus d'un seuil, par exemple pour une durée de liaison supérieure à 1s, le contrôleur 124 pilote la séquence précitée alternée de montée / arrêt / descente / arrêt / montée etc..., tandis que pour une durée de liaison inférieure au seuil, par exemple une durée de liaison inférieure à 0,5s, le contrôleur 124 assimile la liaison temporaire de PH2 à la phase, à un ordre de programmation susceptible de ramener le circuit de commande 120 dans la configuration par défaut antérieure. Cependant à des fins de sécurité ce retour à la configuration par défaut n'est validé qu'après plusieurs brèves liaisons de PH2 à la phase, par exemple 5 de telles liaisons.

Dans le cadre de la présente invention, le boitier 110 comporte en outre un commutateur à deux positions 116. Celui-ci n'est accessible qu'à l'installateur ou un utilisateur averti, après ouverture du boitier 110. Il est utilisé pour moduler les codes émis par le boitier 110 pour distinguer entre un mode de fonctionnement normal et un mode programmation, par exemple sur les bases suivantes :
. commutateur 116 dans une première position de repos: mode de fonctionnement « normal »,
. commutateur 116 dans la seconde position : mode de programmation et de réglage des fins de course, et .
. appui sur la touche arrêt 114, puis tout en maintenant celle-ci, placement du commutateur 116 dans la seconde position : mode de programmation des commandes radio.

Dans le fonctionnement normal :
. l'appui sur la touche montée 112 sollicite le tablier à la montée et celui-ci s'arrête sur sa fin de course haute,
. l'appui sur la touche arrêt 113 stoppe le tablier dans son déplacement, et
. l'appui sur la touche descente 114 sollicite le tablier à la descente et celui-ci s'arrête sur sa fin de course basse.

De préférence dans le cadre de la présente invention, le contrôleur 124 pilote de plus un déplacement pas à pas, lorsque l'une des touches montée 112 ou descente 114 est sollicitée alors que la touche arrêt 113 est préalablement sollicitée et maintenue dans cette position. Un tel mode de fonctionnement pas à pas permet en particulier un réglage précis des fins de course.

Le réglage des fins de course est réalisé selon des modalités similaires aux dispositions précédemment décrites pour la commande filaire.

Les fins de course peuvent être réglées de façon manuelle ou automatique, selon l'équipement associé au tablier, indépendamment l'une de l'autre.

Le règlage automatique d'une fin de course est effectif après X arrêts successifs, par exemple 4 arrêts successifs, dans une même plage.

Un réajustement automatique des fins de course s'effectue toutes les Z actions, par exemple 256 actions, sauf dans le cas où les deux fins de course (haute et basse) sont réglées manuellement.

Le réajustement de la fin de course réglée automatiquement s'effectue uniquement dans sa plage d'arrêt autorisée.

Le réajustement de la fin de course réglée manuellement s'effectue en fonction de la position de la fin de course réglée automatiquement et de la longueur de la course du tablier.

La reconnaissance automatique des fins de course est prioritaire sur la reconnaissance manuelle des fins de course. Pour tout réajustement sur butée physique, qu'il provienne cycliquement (toutes les Z actions) ou qu'il soit lié à un décalage du à la mécanique du tablier ou à une erreur de comptage, un réajustement de la butée opposée sera opéré.

Par ailleurs il faut distinguer là encore les 3 cas 1) de 2 butées (physiques) réglées automatiquement, 2) d'une butée (physique) réglée automatiquement et d'une butée (ou position) réglée manuellement et 3) de deux butées (ou positions) réglées manuellement.

Dans le cas de 2 butées réglées automatiquement, par exemple d'un volet roulant équipé d'une butée physique haute et d'une butée physique basse, l'installateur procède comme suit :
. le commutateur 116 du boitier 110 est placé en mode normal,
. la touche montée 112 est appuyée, le tablier s'arrête sur sa butée haute et la fin de course se règle automatiquement, (cette fin de course haute est mémorisée de façon définitive après 4 arrêts dans sa plage d'arrêt autorisée),
. la touche descente 114 est appuyée, le tablier s'arrête sur sa butée basse et la fin de course se règle automatiquement, (cette fin de course basse est mémorisée de façon définitive après 4 arrêts dans sa plage d'arrêt autorisée).

Dans le cas d'une butée réglée automatiquement et d'une butée réglée manuellement, par exemple d'un volet roulant équipé d'une butée physique haute uniquement, l'installateur procède comme suit :
. le commutateur 116 du boitier 110 est placé en mode normal,
. la touche montée 112 est appuyée, le tablier s'arrête sur sa butée haute et la fin de course se règle automatiquement, (cette fin de course haute est mémorisée de façon définitive après 4 arrêts dans sa plage d'arrêt autorisée),
. les touches montée 112 et descente 114 sont sollicitées pour ajuster la butée de fin de course basse recherchée, et lorsque celle-ci est atteinte :
   - soit la touche montée 112 est appuyée jusqu'à ce que le tablier atteigne sa fin de course haute précédemment mémorisée, ce qui provoque la mémorisation automatique de la position basse de départ en tant que fin de course basse,
   - soit le commutateur 116 est placé en position programmation fins de course, et l'appui sur la touche descente 114 pendant un temps supérieur à un seuil, par exemple de l'ordre de 3s, entraine la mémorisation de la fin de course basse ainsi obtenue (bien évidemment de manière symétrique il s'agit de la touche montée 112 sollicitée pendant 3 s pour mémoriser la fin de course haute).

Dans le cas de deux butées réglées manuellement, par exemple d'un volet roulant non équipé de butée physique et dans l'hypothèse d'une fin de course haute réglée avant la fin de course basse, l'installateur procède comme suit :
. le commutateur 116 du boitier 110 est placé en mode normal,
. les touches montée 112 et descente 114 sont sollicitées pour ajuster la butée de fin de course haute recherchée, et lorsque celle-ci est atteinte :
   . le commutateur 116 est placé en position programmation fins de course, et l'appui sur la touche montée 112 pendant un temps supérieur à un seuil, par exemple de l'ordre de 3s, entraine la mémorisation de la fin de course haute ainsi obtenue (bien évidemment de manière symétrique il s'agit de la touche descente 114 sollicitée pendant 3 s pour mémoriser la fin de course basse),
   . le commutateur 116 du boitier 110 est placé en mode normal,
   . les touches montée 112 et descente 114 sont sollicitées pour ajuster la butée de fin de course basse recherchée, et lorsque celle-ci est atteinte :
      . soit la touche montée 112 est appuyée jusqu'à ce que le tablier atteigne sa fin de course haute précédemment mémorisée, ce qui provoque la mémorisation automatique de la position basse de départ en tant que fin de course basse,
      . soit le commutateur 116 est placé en position programmation fins de course, et l'appui sur la touche descente 114 pendant un temps supérieur à un seuil, par exemple de l'ordre de 3s, entraine la mémorisation de la fin de course basse ainsi obtenue (bien évidemment de manière symétrique il s'agit de la touche montée 112 sollicitée pendant 3 s pour mémoriser la fin de course haute).

Pour supprimer les réglages de fins de course, il suffit de placer le commutateur 116 en position programmation fins de course et d'appuyer sur la touche arrêt 113 pendant un temps supérieur à un seuil, par exemple de l'ordre de 3s.

Il faut noter que tant dans le mode de commande filaire que dans le cas du mode de commande radio, le système conforme à la présente invention permet de monter indifféramment le motoréducteur sur une extrémité ou l'autre du tube d'enroulement. Il est prévu pour cela des moyens aptes à inverser le sens de rotation du moteur, si nécessaire.

De préférence dans le cas de la commande par liaison radio, l'installateur procède alors comme suit :
. le commutateur 116 est placé en mode réglagles fins de course, et
. la touche arrêt 113 est sollicitée pendant un temps déterminé, par exemple de l'ordre de 1s et tout en la maintenant, la touche montée 112 est sollicitée pendant une durée supérieure à un seuil, par exemple de l'ordre de 3s.

On notera que dans le cas de la commande par liaison filaire, il suffit à l'installateur d'inverser la connexion des deux fils PHM et PHD en sortie du boîtier 10.

Le mode de programmation des commandes radio est de préférence adapté pour assurer sélectivement une affectation ou réaffectation d'une commande radio de base, une affectation d'une commande radio complémentaire, la suppression d'une commande radio complémentaire, ou la suppression d'une commande radio de base et d'une ou de commande(s) radio complémentaire(s).

Ce mode de programmation permet d'apparier les commandes radio 110 au récepteur 122, de sorte qu'un émetteur 110 non reconnu par le récepteur 122 ne puisse pas piloter le circuit 120. Ce mode de programmation consiste à faire reconnaître le bloc émetteur 110 et les ordres émis par ce dernier, par le récepteur 122, selon une séquence d'apprentissage prédéfinie.

On appelle généralement « commande radio de base » un boitier de commande 110 adapté pour commander un système d'occultation spécifique et « commande radio complémentaire » un boitier de commande 110 commun à la commande de plusieurs systèmes d'occultation.

Pour affecter ou réafffecter une commande radio de base, de préférence, l'installateur doit solliciter une touche de la commande dans un certain délai consécutif à une phase de réinitialisation. Pour cela de préférence l'installateur procède comme suit :
. le commutateur 116 de cette commande est placé en position « mode normal »,
. les fils PH1 et PH2 sont reliés pendant 5s pour opérer une réinitialisation,
. le circuit 120 est alors en attente de programmation pendant 60s,
. il suffit alors d'appuyer sur la touche arrêt 113 par exemple pendant 1s, pour adresser une trame de reconnaissance au récepteur 122,
. le mode programmation est quitté dès que la trame est reçue.

Pour affecter ou supprimer une commande radio complémentaire, de préférence l'installateur doit tout d'abord opérer une validation en plaçant la commande de base et la commande complémentaire dans un mode de programmation spécifique puis doit solliciter une touche de la commande complémentaire dans un certain délai consécutif à un actionnement de validation spécifique de la commande de base.

Plus précisément de préférence pour affecter une commande radio complémentaire, l'installateur procède comme suit :
. la commande radio de base et la commande radio complémentaire sont placées en position « programmation commandes radio»,
. la touche montée 112 de la commance radio de base est activée pendant 3s,
. le circuit 120 est alors en attente de programmation pendant 60s,
. il suffit alors d'appuyer sur la touche arrêt 113 de la commande radio complémentaire par exemple pendant 1s, pour adresser une trame de reconnaissance au récepteur 122,
. le mode programmation est quitté dès que cette trame est reçue.

Pour supprimer une commande radio complémentaire, l'installateur procède comme suit :
. la commande radio de base et la commande radio complémentaire sont placées en position « programmation commandes radio»,
. la touche descente 114 de la commance radio de base est activée pendant 3s,
. le circuit 120 est alors en attente de programmation pendant 60s,
. il suffit alors d'appuyer sur la touche arrêt 113 de la commande radio complémentaire par exemple pendant 1s, pour adresser une trame de reconnaissance au récepteur 122,
. le mode programmation est quitté dès que cette trame est reçue.

Pour supprimer la commande de radio de base et la ou les commandes radio complémentaires, l'installateur procède comme suit :
. la commande radio de base est placée en position « programmation commandes radio»,
. la touche arrêt 113 de la commance radio de base est activée pendant 3s,
. le circuit 120 est alors en attente de programmation pendant 60s afin d'autoriser la réaffectation d'une commande radio de base par réception d'une nouvelle trame de reconnaissance si l'utilisateur le souhaite,
. le mode programmation est quitté dès que cette trame est reçue.

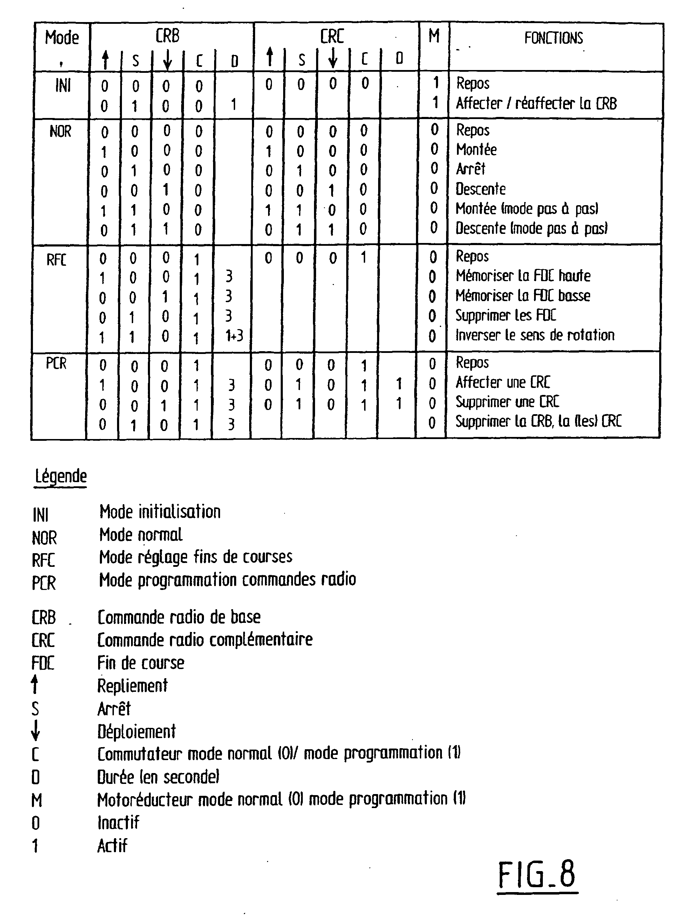

La synthèse des commandes qui viennent d'être décrites pour la commande radio est illustrée sur la figure 8.

## Revendications

1. Dispositif de commande de systèmes d'occultation motorisés, tels que des stores, bannes, volets, portes ou équivalents, destinés notamment à masquer la lumière et/ou à constituer un barrage contre les intrusions, ledit dispositif comprenant des moyens (20,120) de mémorisation des deux fins de course du système d'occultation, correspondant respectivement à une position de fermeture et à une position d'ouverture, **caractérisé par le fait que** les moyens de mémorisation sont adaptés, dans une phase de programmation, à mémoriser préalablement une première fin de course, puis à mémoriser automatiquement en tant que deuxième fin de course, lorsque les système d'occultation atteint ladite première fin de course mémorisée, la position à partir de laquelle le système d'occultation est déplacé avant d'atteindre ladite première fin de course préalablement mémorisée.

2. Dispositif selon la revendication 1, **caractérisé par le fait que** la première fin de course correspond à une butée physique mémorisée automatiquement en déplaçant le tablier du système d'occultation vers celle-ci.

3. Dispositif selon la revendication 1, **caractérisé par le fait que** la première fin de course correspond à une position mémorisée manuellement en ajustant la fin de course correspondante par utilisation de touches montée et descente (12, 14) puis en validant la mémorisation de cette position sans déplacement du tablier par une commande spécifique des touches, par exemple une séquence de trois appuis successifs rapides sur la touche (12, 14) de sollicitation vers cette butée.

4. Dispositif selon la revendication 2, **caractérisé par le fait que** chaque fin de course à mémorisation automatique est mémorisée de façon définitive après x arrêts, par exemple quatre arrêts, dans sa plage d'arrêt autorisée.

5. Dispositif selon l'une des revendications 1 à 4, **caractérisé par le fait qu'**il comprend un contrôleur (24, 124) apte à opérer un réajustement automatique des fins de course toutes les Z actions, par exemple 256 actions.

6. Dispositif selon la revendication 5, **caractérisé par le fait que** le réajustement d'une fin de course réglée automatiquement s'effectue uniquement dans sa plage d'arrêt autorisée.

7. Dispositif selon la revendication 5 ou 6, **caractérisé par le fait que** le réajustement d'une fin de course réglée manuellement s'effectue en fonction de la position d'une fin de course réglée automatiquement et de la longueur de la course du tablier.

8. Dispositif selon l'une des revendications 1 à 7, **caractérisé par le fait que** la deuxième fin de course est mémorisée en plaçant un commutateur spécifique (116) dans une position de programmation de fins de course, et en sollicitant un bouton de commande de déplacement (112, 114).

9. Dispositif selon la revendication 8, **caractérisé par le fait que** le bouton de commande de déplacement (112, 114) correspond à celui requis pour déplacer le tablier vers la fin de course mémorisée.

10. Dispositif selon l'une des revendications 1 à 9, **caractérisé par le fait qu'**il comprend des moyens (120, 116, 112, 113) aptes à inverser le sens de rotation du moteur, sans changer le cablage extérieur.

11. Dispositif selon l'une des revendications 1 à 10, **caractérisé en ce qu'**il comprend un circuit (20, 120) de commande d'une motorisation (30, 130), ce circuit comportant au moins une entrée (PHM, PHD ; PH2) susceptible d'être placée sélectivement dans un état de mode programmation par établissement d'un shunt entre cette entrée et un autre conducteur, telle qu'une ligne d'alimentation électrique, et des moyens (20, 120) sensibles à la durée de cet état pour imposer, selon cette durée, un choix dans un menu parmi différents types prédéfinis de programmation.

12. Dispositif selon la revendication 11, pour application par commande filaire du circuit (20), comprenant au moins deux moyens d'actionnement (PHM, PHD) qui, lorsqu'ils sont respectivement validés, sollicitent le système d'occultation, l'un vers sa position de fermeture ou déploiement, et l'autre vers sa position d'ouverture ou repliement, **caractérisé par le fait qu'**il comprend des moyens (20) aptes à imposer un mode de programmation du dispositif de commande lorsqu'une validation simultanée des deux moyens d'actionnement (PHM, PHD) est détectée.

13. Dispositif selon la revendication 12, **caractérisé par le fait que** les deux moyens d'actionnement sont formés de deux lignes (PHM, PHD) susceptibles d'être reliées simultanément, par exemple à une ligne d'alimentation électrique.

14. Dispositif selon l'une des revendications 12 ou 13, **caractérisé par le fait que** la validation des deux moyens d'actionnement (PHM, PHD) est obtenue en reliant entre elles deux lignes et le cas échéant en commandant au moins une touche (12, 14) d'un boîtier de commande (10).

15. Dispositif selon l'une des revendications 13 ou 14, **caractérisé par le fait que** les deux lignes (PHM, PHD) sont constituées de deux lignes d'alimentation respective et alternée de bobinages (32, 34) du moteur (30).

16. Dispositif selon la revendication 11, pour application par commande radio du circuit (120), comprenant un câble (C) relié au circuit (120) comprenant au moins deux fils reliés l'un (PH1) à une ligne d'alimentation électrique, l'autre (PH2) à une entrée d'un contrôleur, de sorte que la liaison des deux fils (PH1, PH2) impose le passage du circuit de commande dans un mode programmation.

17. Dispositif selon l'une des revendications 11 à 16, **caractérisé par le fait qu'**il comprend un câble (C) à quatre fils : un fil de neutre, un fil de terre et deux fils (PHM, PHD ; PH1, PH2) susceptibles d'être reliés tous les deux en commun sur une ligne d'alimentation électrique, lors d'un processus de programmation.

18. Dispositif selon l'une des revendications 11 à 17, **caractérisé par le fait qu'**il comprend des moyens (20, 120) aptes à comparer la durée de placement de l'entrée (PHM, PHD ; PH2) dans l'état de programmation, à deux seuils de temps (T1, T2).

19. Dispositif selon l'une des revendications 11 à 18, **caractérisé par le fait qu'**il comprend des moyens (20, 120) aptes à comparer la durée de placement de l'entrée (PHM, PHD ; PH2) dans l'état de programmation, avec plusieurs plages de temps, pour sélectionner selon le résultat de la comparaison obtenu parmi plusieurs fonctions disponibles.

20. Dispositif selon l'une des revendications 11 à 19, **caractérisé par le fait que** le circuit de commande (20, 120) comporte un contrôleur (24, 124) sensible à la durée de liaison simultanée de deux lignes (PHM, PHD ; PH1, PH2), et adapté pour imposer un mode de réinitialisation lorsque cette durée tombe dans une plage de temps prédéfini.

21. Dispositif selon l'une des revendications 11 à 20, **caractérisé par le fait qu'**il le circuit de commande (20, 120) comporte un contrôleur (24, 124) sensible à la durée de liaison simultanée de deux lignes (PHM, PHD ; PH1, PH2) et adapté pour définir la séquence suivante :
- lorsque la durée de liaison simultanée est inférieure à un premier seuil T1 (par exemple de 5s), le contrôleur (24) impose une réinitialisation du circuit de commande,
- lorsque la durée de liaison simultanée est supérieure à un premier seuil T1 et inférieure à un second seuil T2 (soit par exemple compris par exemple entre 5 et 50s, typiquement de l'ordre de 30s) le contrôleur (24) impose une première configuration, par exemple une configuration banne ;
- lorsque la durée de liaison simultanée est supérieure au second seuil T2 (soit par exemple supérieure à 50s), le contrôleur (24) impose une seconde configuration, par exemple une configuration volet roulant.

22. Dispositif selon la revendication 21, **caractérisé par le fait que** le contrôleur (24) est en outre adapté pour détecter une durée de liaison simultanée supérieure à un troisième seuil, par exemple une durée de liaison de l'ordre de 90s, pour piloter alors un mode de fonctionnement « séquentiel ».

23. Dispositif selon la revendication 22, **caractérisé par le fait que** dans le mode de fonctionnement séquentiel, toute liaison impulsionnelle ultérieure de l'une au moins des deux lignes (PH1, PH2) à la ligne d'alimentation électrique, entraîne les commandes alternées suivantes : montée / stop / descente / stop / montée / stop / etc...

24. Dispositif selon l'une des revendications 11 à 23, **caractérisé par le fait que** l'accès à l'extrémité du câble (C) opposée au circuit de commande (20, 120) est protégée, par exemple par un système de clé.

25. Dispositif selon l'une des revendications 1 à 24, comprenant des moyens (20, 120) sensibles à la durée d'activation de moyens de sollicitation (12, 14 ; PH2), pour assurer des fonctions actives différentes selon que la durée d'activation est inférieure ou supérieure à au moins un seuil déterminé.

26. Dispositif selon la revendication 25, **caractérisé par le fait que** les fonctions actives différentes correspondent soit à une fonction de déplacement du système d'occultation, soit à une fonction de mémorisation de fins de course.

27. Dispositif selon l'une des revendications 25 à 26, **caractérisé par le fait qu'**il comprend un contrôleur (24) apte à comparer la durée d'actionnement de touches (12, 14) montée/descente, à un seuil, pour attribuer à l'actionnement des touches une commande de programmation lorsque cette durée d'actionnement est inférieure au seuil, sans déplacement du tablier, et attribuer à ces touches une fonction de commande en déplacement du tablier, lorsque au contraire la durée d'actionnement est supérieure au seuil.

28. Dispositif selon l'une des revendications 25 à 26, **caractérisé par le fait qu'**il comprend un contrôleur (24) apte à comparer la durée de liaison d'un fil (PH2), à une ligne d'alimentation électrique, avec un seuil, pour piloter une séquence alternée de montée / arrêt / descente / arrêt / montée etc..., lorsque cette durée est supérieure au seuil, et au contraire assimiler la liaison temporaire du fil (PH2) à la ligne d'alimentation électrique, à un ordre de programmation, par exemple susceptible de ramener le circuit de commande (120) dans la configuration par défaut antérieure, lorsque cette durée est inférieure au seuil.

29. Dispositif selon l'une des revendications 1 à 28, prise en combinaison avec la revendication 11, **caractérisé par le fait que** le shunt est choisi dans le groupe comprenant au moins une liaison directe sous forme d'un court-circuit, une liaison résistive, une liaison capacitive et une liaison unidirectionnelle à diode.

## Claims

1. Control device for motorized shading systems, such as blinds, awnings, shutters, doors or equivalent, intended in particular to mask light and/or to constitute a barrier against intrusions, the said device comprising means (20, 120) of storing two ends of travel of the shading system, corresponding to a closed position and to an open position respectively, **characterized in that** the storage means are adapted, in a programming phase, to previously store a first end of travel and then to automatically store, as a second end of travel, when the shading system reaches the said first stored end of travel, the position from which the shading system is moved before reaching the said previously stored first end of travel.

2. Device according to Claim 1, **characterized in that** the first end of travel corresponds to a physical stop stored automatically on moving the apron of the shading system towards it.

3. Device according to Claim 1, **characterized in that** the first end of travel corresponds to a position stored manually by adjusting the corresponding end of travel by the use of raising and lowering keys (12, 14) and then by validating the storage of this position without moving the apron by a specific command from the keys, for example a sequence of three rapid successive presses on the key (12, 14) for driving towards this stop.

4. Device according to Claim 2, **characterized in that** each automatically stored end of travel is stored definitively after x stops, for example four stops, within its authorized stop range.

5. Device according to one of Claims 1 to 4, **characterized in that** it comprises a controller (24, 124) able to operate an automatic readjustment of the ends of travel every Z actions, for example 256 actions.

6. Device according to Claim 5, **characterized in that** the readjustment of an automatically adjusted end of travel is carried out only within its authorized stop range.

7. Device according to Claim 5 or 6, **characterized in that** the readjustment of a manually adjusted end of travel is carried out as a function of the position of an automatically adjusted end of travel and of the length of the travel of the apron.

8. Device according to one of Claims 1 to 7, **characterized in that** the second end of travel is stored by placing a specific switch (116) in an end of travel programming position, and by operating a movement command button (112, 114).

9. Device according to Claim 8, **characterized in that** the movement command button (112, 114) corresponds to the one required to move the apron towards the stored end of travel.

10. Device according to one of Claims 1 to 9, **characterized in that** it comprises means (120, 116, 112, 113) able to reverse the direction of rotation of the motor, without changing the external wiring.

11. Device according to one of Claims 1 to 10, **characterized in that** it comprises a circuit (20, 120) for controlling a motorization (30, 130), this circuit comprising at least one input (PHM, PHD; PH2) able to be placed selectively in a programming mode state by the establishment of a shunt between that input and another conductor, such as an electrical power supply line, and means (20, 120) sensitive to the duration of this state in order to impose, according to this duration, a choice in a menu from among different predefined types of programming.

12. Device according to Claim 11, for application by wired control of the circuit (20), comprising at least two actuating means (PHM, PHD) which, when they are respectively validated, drive the shading system, one of them towards its closed or deployment position and the other towards its open or folded up position, **characterized in that** it comprises means (20) able to impose a programming mode of the control device when a simultaneous validation of the two actuating means (PHM, PHD) is detected.

13. Device according to Claim 12, **characterized in that** the two actuating means are formed of two lines (PHM, PHD) able to be connected simultaneously, for example to an electrical power supply line.

14. Device according to one of Claims 12 or 13, **characterized in that** the validation of the two actuating means (PHM, PHD) is obtained by connecting two lines together and, if necessary, by operating at least one key (12, 14) of a control unit (10).

15. Device according to one of Claims 13 or 14, **characterized in that** the two lines (PHM, PHD) are constituted by two respective and alternate power supply lines of windings (32, 34) of the motor (30).

16. Device according to Claim 11, for application by radio control of the circuit (120), comprising a cable (C) connected to the circuit (120) comprising at least two wires, one of them (PH1) connected to an electrical power supply line, the other one (PH2) to an input of a controller, such that the connection of the two wires (PH1, PH2) imposes the changing of the control circuit into a programming mode.

17. Device according to one of Claims 11 to 16, **characterized in that** it comprises a cable (C) with four wires: a neutral wire, an earth wire and two wires (PHM, PHD; PH1, PH2) both able to be connected in common onto an electrical power supply line, during a programming procedure.

18. Device according to one of Claims 11 to 17, **characterized in that** it comprises means (20, 120) able to compare the duration of placing the input (PHM, PHD; PH2) into the programming state with two time thresholds (T1, T2).

19. Device according to one of Claims 11 to 18, **characterized in that** it comprises means (20, 120) able to compare the duration of placing the input (PHM, PHD; PH2) into the programming state, with several time ranges, in order to select from among several available functions according to the result of the comparison obtained.

20. Device according to one of Claims 11 to 19, **characterized in that** the control circuit (20, 120) comprises a controller (24, 124) sensitive to the duration of simultaneous connection of two lines (PHM, PHD; PH1, PH2), and adapted to impose a re-initialization mode when this duration falls into a predefined time range.

21. Device according to one of Claims 11 to 20, **characterized in that** the control circuit (20, 120) comprises a controller (24, 124) sensitive to the duration of simultaneous connection of two lines (PHM, PHD; PH1, PH2) and adapted to define the following sequence:
- when the duration of simultaneous connection is less than a first threshold T1 (for example 5s), the controller (24) imposes a re-initialization of the control circuit,
- when the duration of simultaneous connection is greater than a first threshold T1 and less than a second threshold T2 (say, for example, between 5 and 50s, typically of the order of 30s) the controller (24) imposes a first configuration, for example an awning configuration;
- when the duration of simultaneous connection is greater than the second threshold T2 (say, for example, greater than 50s), the controller (24) imposes a second configuration, for example a rolling shutter configuration.

22. Device according to Claim 21, **characterized in that** the controller (24) is furthermore adapted to detect a duration of simultaneous connection greater than a third threshold, for example a duration of connection of the order of 90s, in order to then control a "sequential" operating mode.

23. Device according to Claim 22, **characterized in that** in the sequential operating mode, any subsequent pulse connection of at least one of the two lines (PH1, PH2) to the electrical power supply line, gives rise to the following alternating commands: raise / stop /lower / stop / raise /stop / etc.

24. Device according to one of Claims 11 to 23, **characterized in that** the access to the end of the cable (C) opposite to the control circuit (20, 120) is protected, for example by a key system.

25. Device according to one of Claims 1 to 24, comprising means (20, 120) sensitive to the duration of activation of operating means (12, 14, PH2) in order to provide different active functions depending on whether the duration of activation is less than or greater than a specified threshold.

26. Device according to Claim 25, **characterized in that** the different active functions correspond either to a function of movement of the shading system, or to a function of storage of ends of travel.

27. Device according to one of Claims 25 to 26, **characterized in that** it comprises a controller (24) able to compare the duration of actuation of raise/lower keys (12, 14) with a threshold in order to allocate a programming command to the actuation of the keys when this duration of actuation is less than the threshold, without movement of the apron, and to allocate an apron movement command function to these keys when, on the contrary, the duration of actuation is greater than the threshold.

28. Device according to one of Claims 25 to 26, **characterized in that** it comprises a controller (24) able to compare the duration of connection of a wire (PH2) to an electrical power supply line with a threshold, in order to control an alternating raise /stop / lower/ stop / raise etc. sequence when this duration is greater than the threshold and, on the contrary, to assimilate the temporary connection of the wire (PH2), to the electrical power supply line, with a programming command, for example able to return the control circuit (120) into the prior default configuration, when this duration is less than the threshold.

29. Device according to one of Claims 1 to 28, taken in combination with Claim 11, **characterized in that** the shunt is chosen from the group comprising at least one direct connection in the form of a short circuit, a resistive connection, a capacitive connection and a unidirectional diode connection.

## Patentansprüche

1. Steuervorrichtung für motorgetriebene Verdunklungssysteme, wie Rollos, Planen, Fensterläden, Tore oder dergleichen, die insbesondere dazu bestimmt sind, das Licht auszublenden und/oder eine Sperre gegen die Eindringungen zu bilden, wobei die Vorrichtung Mittel (20, 120) zum Speichern der beiden Endstellungen des Verdeckungssystems umfasst, die einer Schließ- bzw. einer Öffnungsposition entsprechen, **dadurch gekennzeichnet, dass** die Speichermittel angepasst sind, in einer Programmierphase, vorab eine erste Endstellung zu speichern, dann automatisch als zweite Endstellung, wenn das Verdunklungssystem die erste gespeicherte Endstellung erreicht, die Position zu speichern, von der ab das Verdunklungssystem bewegt wird, bevor es die vorab gespeicherte erste Endstellung erreicht.

2. Vorrichtung nach Anspruch 1, **dadurch gekennzeichnet, dass** die erste Endstellung einem physischen Anschlag entspricht, der automatisch gespeichert wird, indem die Schutzvorrichtung des Verdunklungssystems in dessen Richtung bewegt wird.

3. Vorrichtung nach Anspruch 1, **dadurch gekennzeichnet, dass** die erste Endstellung einer Position entspricht, die manuell gespeichert wird, indem die entsprechende Endstellung durch Verwenden der Auf- und Ab-Tasten (12, 14) eingestellt und dann die Speicherung dieser Position ohne Bewegung der Schutzvorrichtung durch einen speziellen Tastenbefehl, z.B. durch dreimaliges schnelles, aufeinanderfolgendes Drücken auf die Drucktaste (12, 14) in Richtung dieses Anschlags bewirkt wird.

4. Vorrichtung nach Anspruch 2, **dadurch gekennzeichnet, dass** jede Endstellung für eine automatische Speicherung endgültig nach x-maligem Halten, zum Beispiel viermaligem Anhalten, in ihrem erlaubten Anhaltebereich gespeichert wird.

5. Vorrichtung nach einem der Ansprüche 1 bis 4, **dadurch gekennzeichnet, dass** sie einen Controller (24, 124) umfasst, der geeignet ist, alle Z Aktionen, z.B. 256 Aktionen, eine automatische Anpassung der Endstellungen durchzuführen.

6. Vorrichtung nach Anspruch 5, **dadurch gekennzeichnet, dass**.das Nachstellen einer automatisch gesteuerten Endstellung einzig in ihrem erlaubten Anhaltebereich erfolgt.

7. Vorrichtung nach Anspruch 5 oder 6, **dadurch gekennzeichnet, dass** das Nachstellen einer manuell gesteuerten Endstellung entsprechend der Position der automatisch gesteuerten Endstellung und der Weglänge der Schutzvorrichtung erfolgt.

8. Vorrichtung nach einem der Ansprüche 1 bis 7, **dadurch gekennzeichnet, dass** die zweite Endstellung gespeichert wird, indem ein spezifischer Schalter (116) in eine Endstellungsprogrammierposition gebracht und ein Verstellsteuerknopf (112, 114) gedrückt wird.

9. Vorrichtung nach Anspruch 8, **dadurch gekennzeichnet, dass** der Verstellsteuerknopf (112, 114) demjenigen entspricht, der erforderlich ist, um die Schutzvorrichtung zur gespeicherten Endstellung zu bewegen.

10. Vorrichtung nach einem der Ansprüche 1 bis 9, **dadurch gekennzeichnet, dass** sie Mittel (120, 116, 112, 113) umfasst, die die Drehrichtung des Motors ändern können, ohne die äußere Verkabelung zu ändern.

11. Vorrichtung nach einem der Ansprüche 1 bis 10, **dadurch gekennzeichnet, dass** sie einen Steuerschaltkreis (20, 120) einer Motorisierung (30, 130) umfasst, wobei dieser Schaltkreis wenigstens einen Eingang (PHM, PHD; PH2) umfasst, der geeignet ist, um wahlweise in einen Zustand der Modusprogrammierung durch Aufbau eines Shunt zwischen diesem Eingang und einen anderen Leiter gesetzt zu werden, sowie eine elektrische Versorgungsleitung und Mittel (20, 120), die empfindlich sind bzgl. der Dauer dieses Zustands, um entsprechend dieser Dauer eine Wahl in einem Menu unter verschiedenen vordefinierten Programmierungstypen zu treffen.

12. Vorrichtung nach Anspruch 11, die für einen kabelgesteuerten Betrieb des Schaltkreises (20) wenigstens zwei Betätigungsmittel (PHM, PHD) umfasst, von denen bei jeweiliger Bestätigung das eine das Verdunklungssystem in Richtung seiner Schließ- oder aufgefalteten Position und das andere das Verdunklungssystem in Richtung seiner Öffnungs-oder zusammengefalteten Position bringen, **dadurch gekennzeichnet, dass** sie Mittel (20) umfasst, die geeignet sind, die Steuervorrichtung in einen Programmiermodus zu bringen, wenn eine gleichzeitige Bestätigung der beiden Betätigungsmittel (PHM, PHD) detektiert wird.

13. Vorrichtung nach Anspruch 12, **dadurch gekennzeichnet, dass** die beiden Betätigungsmittel aus zwei Leitungen (PHM, PHD) gebildet werden, die geeignet sind, gleichzeitig z.B. mit einer elektrischen Versorgungsleitung verbunden zu werden.

14. Vorrichtung nach einem der Ansprüche 12 oder 13, **dadurch gekennzeichnet, dass** die Bestätigung der beiden Betätigungsmittel (PHM, PHD) erhalten wird, indem zwischen ihnen zwei Leitungen verbunden werden und gegebenenfalls wenigstens eine Taste (12, 14) eines Steuergehäuses (10) gedrückt wird.

15. Vorrichtung nach einem der Ansprüche 13 oder 14, **dadurch gekennzeichnet, dass** die beiden Leitungen (PHM, PHD) zwei Leitungen zur jeweiligen und wechselnden Versorgung von Spulen (32, 34) des Motors (30) bilden.

16. Vorrichtung nach Anspruch 11, die für einen funkgesteuerten Betrieb des Schaltkreises (120) ein mit dem Schaltkreis (120) verbundenes Kabel (C) umfasst, das wenigstens zwei Adern umfasst, wobei die eine (PH1) mit einem elektrischen Versorgungskabel verbunden ist und die andere (PH2) mit dem Eingang eines Controllers, damit die Verbindung der beiden Adern (PH1, PH2) die Umschaltung des Steuerschaltkreises in einen Programmiermodus bewirkt.

17. Vorrichtung nach einem der Ansprüche 11 bis 16, **dadurch gekennzeichnet, dass** sie ein Kabel (C) mit vier Adern umfasst: einen Nulleiter, eine Erdung und zwei Adern (PHM, PHD; PH1, PH2), die geeignet sind, alle beide gemeinsam bei einem Programmiervorgang an eine elektrische Versorgungsleitung angeschlossen zu werden.

18. Vorrichtung nach einem der Ansprüche 11 bis 17, **dadurch gekennzeichnet, dass** sie Mittel (20, 120) umfasst, die geeignet sind, die Dauer der Versetzung des Eingangs (PHM, PHD; PH2) in den Programmierzustand mit zwei Zeitschwellen (T1, T2) zu vergleichen.

19. Vorrichtung nach einem der Ansprüche 11 bis 18, **dadurch gekennzeichnet, dass** sie Mittel (20, 120) umfasst, die geeignet sind, die Dauer der Versetzung des Eingangs (PHM, PHD; PH2) in den Programmierzustand mit mehreren Zeitbereichen zu vergleichen, um entsprechend des erhaltenen Vergleichsergebnisses unter mehreren verfügbaren Funktionen auszuwählen.

20. Vorrichtung nach einem der Ansprüche 11 bis 19, **dadurch gekennzeichnet, dass** der Steuerschaltkreis (20, 120) einen Controller (24, 124) umfasst, der bzgl. der Dauer der gleichzeitigen Verbindung zweier Leitungen (PHM, PHD; PH1, PH2) empfindlich und angepasst ist, einen Reinitialisierungsmodus zu bewirken, wenn diese Zeitdauer in einen vordefinierten Zeitbereich Zeit fällt.

21. Vorrichtung nach einem der Ansprüche 11 bis 20, **dadurch gekennzeichnet, dass** der Steuerschaltkreis (20, 120) einen Controller (24, 124) umfasst, der bzgl. der Dauer der gleichzeitigen Verbindung zweier Leitungen (PHM, PHD; PH1, Ph2) empfindlich und angepasst ist, die folgende Sequenz zu definieren:
- wenn die Dauer der gleichzeitigen Verbindung unterhalb einer ersten Schwelle T1 (z.B. 5s) ist, bewirkt der Controller (24) eine Reinitialisierung des Steuerschaltkreises,
- wenn die Dauer der gleichzeitigen Verbindung oberhalb einer ersten Schwelle T1 und unterhalb einer zweiten Schwelle T2 ist (z.B. im Zeitraum zwischen 5 und 50s, typischerweise in der Ordnung von 30s liegt), veranlasst der Controller (24) eine erste Konfiguration, z.B. eine Planen-Konfiguration;
- wenn die Dauer der gleichzeitigen Verbindung oberhalb der zweiten Schwelle T2 ist (z.B. oberhalb 50s), veranlasst der Controller (24) eine zweite Konfiguration, z.B. eine Rolladen-Konfiguration.

22. Vorrichtung nach Anspruch 21, **dadurch gekennzeichnet, dass** der Controller (24) weiter angepasst ist, um eine Dauer der gleichzeitigen Verbindung zu detektieren, die oberhalb einer dritten Schwelle ist, z.B. eine Verbindungsdauer der Größenordnung von 90s, um dann eine "sequentielle" Funktionsweise zu steuern.

23. Vorrichtung nach Anspruch 22, **dadurch gekennzeichnet, dass** in der sequentiellen Funktionsweise jegliche nachträgliche pulsartige Verbindung der wenigstens einen der beiden Leitungen (PH1, PH2) mit der elektrischen Versorgungsleitung die folgenden wechselnden Befehle nach sich zieht: Auf/Stop/Ab/Stop/Auf/Stop/etc.

24. Vorrichtung nach einem der Ansprüche 11 bis 23, **dadurch gekennzeichnet, dass** der Zugang zum dem Steuerschaltkreis (20, 120) gegenüberliegenden Kabelende (C) z.B. durch ein Schlüsselsystem geschützt ist.

25. Vorrichtung nach einem der Ansprüche 1 bis 24, welche Mittel (20, 120) umfasst, die empfindlich sind bzgl. der Aktivierungsdauer der Druckmittel (12, 14; PH2), um unterschiedliche aktive Funktionen sicherzustellen, abhängig davon, ob die Aktivierungsdauer unterhalb oder oberhalb wenigstens einer bestimmten Schwelle ist.

26. Vorrichtung nach Anspruch 25, **dadurch gekennzeichnet, dass** die unterschiedlichen Aktivierungsfunktionen entweder einer Bewegungsfunktion des Verdunklungssystems oder einer Funktion zum Speichern von Endstellungen entsprechen.

27. Vorrichtung nach einem der Ansprüche 25 bis 26, **dadurch gekennzeichnet, dass** sie einen Controller (24) umfasst, der geeignet ist, die Betätigungsdauer von Auf/Ab-Tasten (12,14) mit einer Schwelle zu vergleichen, um der Betätigung der Tasten einen Programmierbefehl zuzuweisen, wenn diese Betätigungsdauer unterhalb der Schwelle ist, ohne Bewegung der Schutzvorrichtung, und um diesen Tasten eine Steuerfunktion unter Bewegung der Schutzvorrichtung zuzuweisen, wenn im Gegensatz dazu die Betätigungsdauer oberhalb der Schwelle ist.

28. Vorrichtung nach einem der Ansprüche 25 bis 26, **dadurch gekennzeichnet, dass** sie einen Controller (24) umfasst, der geeignet ist, die Dauer der Verbindung einer Ader (PH2) mit einer elektrischen Versorgungsleitung mit einer Schwelle zu vergleichen, um eine wechselnde Sequenz von Auf/Stop/Ab/Stop/Auf etc... zu steuern, wenn diese Dauer oberhalb der Schwelle ist, und im Gegensatz dazu die temporäre Verbindung der Ader (PH2) mit der elektrischen Versorgungsleitung mit einem Programmierbefehl gleichzustellen, der z.B. geeignet ist, den Steuerschaltkreis (120) in die frühere Standardkonfiguration zurückzuführen, wenn diese Dauer unterhalb der Schwelle ist.

29. Vorrichtung nach einem der Ansprüche 1 bis 28, in Kombination mit Anspruch 11, **dadurch gekennzeichnet, dass** der Shunt in der Gruppe gewählt wird, die wenigstens eine direkte Verbindung in der Form eines Kurzschlusses, eine Widerstandsverbindung, eine kapazitive Verbindung und eine unidirektionale Verbindung in Form einer Diode umfasst.
